# EUROPEAN PATENT APPLICATION

(11) **EP 1 191 432 A2**
(43) Date of publication of application: **27.03.2002**
(21) Application number: 01307567.6
(22) Date of filing: 06.09.2001
(51) Int. Cl.: G06F 3/12

(54) **Virtual print previewing**

(30) Priority: 21.09.2000 US 668005
(71) Applicant: Ricoh Company Ltd., Tokyo 143-8555 (JP)
(72) Inventor: Sato, Tomotoshi, Yokohama-shi, Kanagawa (JP)
(74) Representative: Senior, Alan Murray

(57) **Abstract**

A method and system for previewing an electronic document is disclosed. In one aspect, document information associated with an electronic document is transmitted from a client to a selected printing device. Upon receiving the document information, the selected printing device generates preview document data based on the received document information and one or more characteristics that are associated with the selected printing device and generally not available at the requesting client. The preview document data is then transmitted to the client from the selected printing device to cause a preview version of the electronic document to be displayed at the client.

## Description

The present invention generally relates to the processing of electronic documents. The invention relates more specifically to providing a virtual print preview mechanism for previewing electronic documents.

Computers and output devices such as printers are extensively used in word processing and other document management tasks. In general, each computer is typically connected to one or more printing devices. The connection may be over a dedicated line that is established directly between the computer and the printing device or instead, through a shared network, such as a company's internal network or LAN that allows the printing device to be shared by multiple computers connected to the network. In general, to allow a computer to communicate with a particular printing device, a print driver that is associated with the specific printing device is installed on the client computer. Each print driver includes a set of commands that allow applications executing on the client to communicate with the corresponding printing device. In addition, each print driver includes a set of static print attributes that are believed to be associated with the specific printing device. For example, the set of print attributes may include the resolution or the set of fonts that the print driver deems to be supported by the printing device.

Many word processing applications, such as Microsoft Word® and WordPerfect®, provide a preview option that allows a user to preview a particular document before it sent to a selected printing device. For example, using Microsoft Word® a user may preview a document by selecting the "Print Preview" option under the "File" pulled down menu. Thereafter, the user may cause the document to be printed if they are satisfied with document's look (document layout), or if not, continue to edit the document until the document layout meets with the user's satisfaction.

When a user selects a conventional preview option the conventional preview program communicates with the corresponding print driver to generate print preview data that estimates how the document will actually look once it is printed on the printing device. For example, in response to a user selecting the preview option in Microsoft Word®, the preview program communicates with the corresponding driver of the selected printing device to retrieve a set of print attributes. Based on the set of print attributes the preview program generates a raster image and displays the image (document layout) to the user on the client computer.

However, a drawback with using a conventional preview program to view a document's layout is that the user is not always presented with an accurate view of how the document will look when it is actually printed. For example, because the raster image is based on a set of static print attributes that were stored at the time the print driver was installed, certain printer characteristics that are unavailable to the print driver, for example characteristics that have changed since the driver was installed or which were not known at the time the driver was installed, may affect how a particular document looks when it is actually printed. For example, finishing options such as paper type, paper color, paper thickness, stapling, and perforation options are typically unavailable to a print driver. Thus, although the typical print preview program can provide an estimated view of how a document will look when it is printed, because certain printer characteristics may not be available at the client computer (i.e., known by the print driver) the user may be presented with a document layout that does not accurately depict what the document will look like when it is actually printed.

Based on the foregoing, there is a clear need for a preview approach that takes into account printer characteristics that are typically unavailable at a client computer when generating a document layout

There is also a need for a document preview approach that takes into account printer characteristics that change over time.

In one aspect, a method and system for previewing an electronic document is disclosed. In one aspect, document information associated with an electronic document is transmitted from a client to a selected printing device. Upon receiving the document information, the selected printing device generates preview document data based on the received document information and one or more characteristics that are associated with the selected printing device and generally not available at the requesting client. The preview document data is then transmitted to the client from the selected printing device to cause a preview version of the electronic document to be displayed at the client.

In other aspects, the invention encompasses a computer apparatus, and a computer program.

The present invention is illustrated by way of example, and not by way of limitation, in the figures of the accompanying drawings and in which like reference numerals refer to similar elements and in which:
FIG. 1A is a block diagram of a document previewing system in which the invention may be utilized;
FIG. 1B is a block diagram of the system of FIG. 1A depicting certain internal details;
FIG. 2 is a diagram that illustrates an example preview window that may be displayed on client;
FIG. 3 is a flow diagram that illustrates a method for previewing documents prior to being printed on a selected printing device;
FIG. 4 illustrates an example of the types of paper characteristic information that may be stored by printing device;
FIG. 5 illustrates an example of a computer system that may be employed in a printing device in which the invention may be utilized; and
FIG. 6 is a diagram that illustrates another example of a preview window that may be displayed on client.

A method and system for previewing electronic documents is described. In the following description, for the purposes of explanation, numerous specific details are set forth in order to provide a thorough understanding of the present invention. It will be apparent, however, to one skilled in the art that the invention may be practiced without these specific details. In other instances, well-known structures and devices are shown in block diagram form in order to avoid unnecessarily obscuring the invention.

### OPERATIONAL CONTEXT

A document preview mechanism is provided for generating preview document data. In one embodiment, when a user requests to preview an electronic document, information associated with the electronic document is sent from the user's computer (client computer) to the selected printing device. Upon receiving the electronic document information, the selected printing device generates preview document data based on the electronic document information and the specific characteristics of the selected printing device. The selected printing device then forwards the preview document data back to the client computer for display to the user.

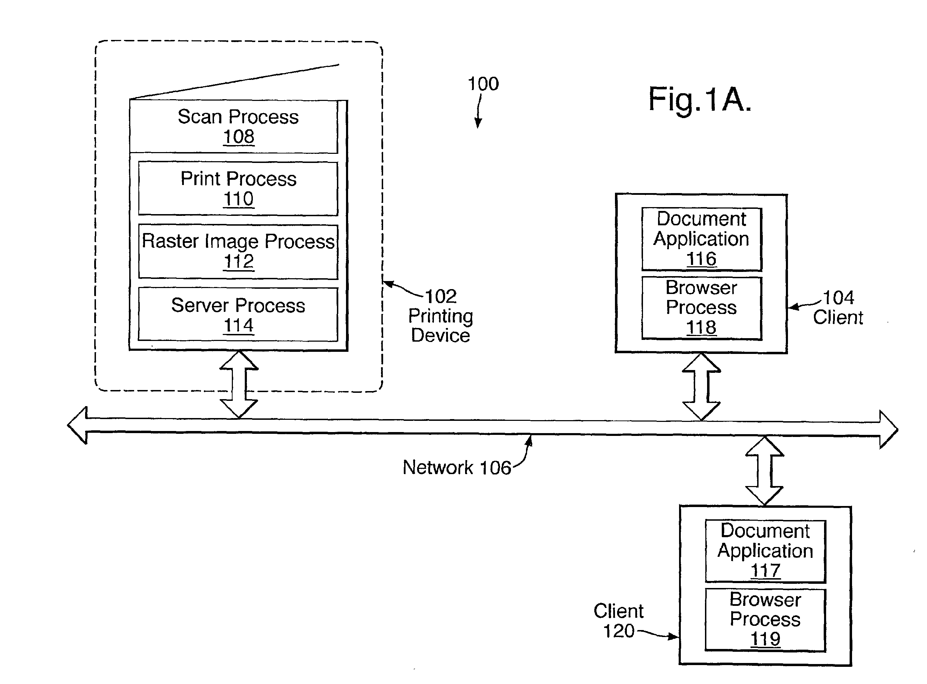

FIG. 1A illustrates a block diagram of a document previewing system 100 in which the invention may be utilized. The system 100 generally includes a printing device 102, one or more computing devices (Clients 104,120), and a network 106.

The computing devices 104 and 120 each comprise a workstation, personal computer, or other device that can be used to generate a document. For example, client 104 includes a document application 116 and a browser process 118. The document application 116 provides a mechanism for generating electronic documents. The document information may be generated in a variety data formats, with each format having a set of tokens or commands that define how the objects and text are to be printed for each page of the document. In one embodiment, document application 116 represents a word processing application, such as Microsoft Word®, WordPerfect® or any other word processing application that may be used to generate an electronic document. Thus, the document information may be generated in a variety of different file formats that includes but is not limited to Microsoft Word® or WordPerfect® file formats.

Browser process 118 represents a browser type application, such as Netscape Navigator® or Microsoft Internet Explorer®, that may be used to communicate with printing device 102 in a client-server relationship. In one embodiment, browser process 118 provides a display interface that allows a user to preview a document that was created using document application 116. In one embodiment, browser process 118 provides a user interface for specifying specific print options and for browsing a preview document generated by printing device 102.

Network 106 provides a communication link between printing device 102 and the computing devices 104 and 120. Network 106 may be the global packet-switched network known as the Internet, a private Intranet for a particular company, a dedicated serial or parallel link, a wireless communication link or any combination thereof. The network 106 may form part of a LAN or WAN and may use a variety of diffcrent communication protocols.

The printing device 102 is configured to communicate with clients 104 and 120 over network 106 and to generate preview document data based on the specific characteristics of the printing device 102. In this example, printing device 102 is a multifunctional printer or multifunctional peripheral (MFP) that includes a scan process 108, a print process 110, a raster image processor (RIP) 112 and a server process 114. For example, printing device 102 may represent an Aficio series multifunctional printer, commercially available from Ricoh Corporation.

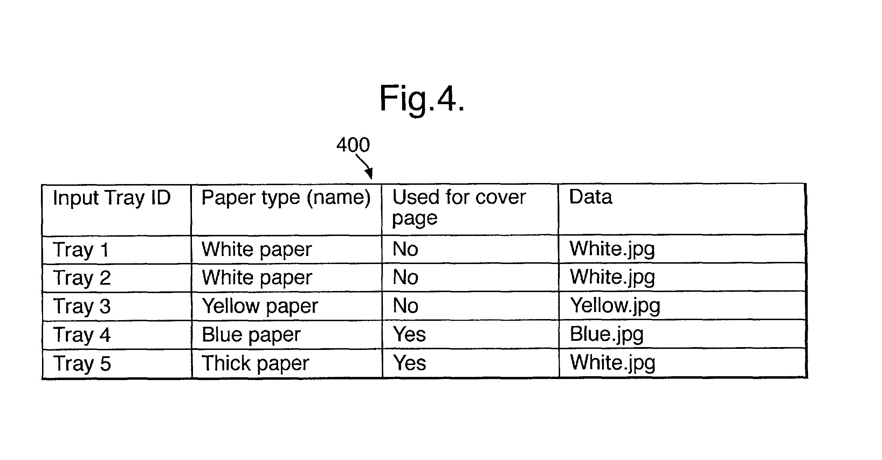

Scan process 108 provides a mechanism for scanning a document to generate a scanned image data file. In certain embodiments, scan process 108 is used to generate a set of available paper characteristics by scanning the different types and different colors of paper that are available for printing documents. In one embodiment, scan process 108 generates a set of paper characteristic files that contain specific information as to the type and color of paper that is available for printing documents. For example, in response to scanning a sheet of red paper scan process 108 may generate a gif, .jpg or other type of image file that includes information depicting the color of the red paper. The paper characteristic files are then stored for use by the Raster Image process 112 in generating the preview document data. FIG. 4 illustrates an example of some of the types of paper characteristic information 400 that may be stored by printing device 102.

Print process 110 provides a mechanism for printing electronic documents that are received from clients 104 and 120 over network 106. Additionally, print process 110 may also be configured to work as a paper copier for making copies of paper documents that are fed into printing device 102. In one embodiment, print process 110 is configured to receive raster image data and to generate hard-copy printouts based on the received raster image data. In certain embodiments, the printouts may be created using a variety of different finishing options. As will be explained in further detail below, these finishing options may include but are not limited to a variety of options such as the choice of different duplex modes, stapling methods, hole punching preferences or paper type selection.

The Raster Image Process (RIP) 112 is configured to receive preview requests from clients 104, 120 and to generate preview document data based on the electronic document information associated with the preview requests and specific characteristics of the printing device 102. In certain embodiments, the electronic document information received from either client 104 or 120 may be in the form of print data, such Printer Description Language (PDL) data, Printer Control Language (PCL) data, raster image data or any other type of data that is generally sent to a printing device.

Upon receiving the electronic document information, the RIP 112 rasterizes the information to generate preview document data for displaying a preview version of the electronic document on either client 104 or 120. In one embodiment, a preview request may identify a specific type and/or color of paper for printing the electronic document. Upon receiving such a request, the RIP 112 retrieves the corresponding paper characteristic file which is then used in generating the preview document data.

In certain embodiments, RIP 112 generates the preview document data based on the display resolution that is supported by the requesting client. For example, if the display associated with client 104 has a resolution of 100 dpi, RIP 112 generates preview document data (raster image data) based on the resolution (100 dpi) capabilities of client 104 even though printing device 102 may have the capability of printing at a higher resolution.

Server process 114 is configured to receive print preview requests from clients 104 and 120 and to forward the received preview document information to RIP 112. Server process 114 is also configured to send raster image data generated by RIP 112 back to the corresponding requesting client (104, 120).

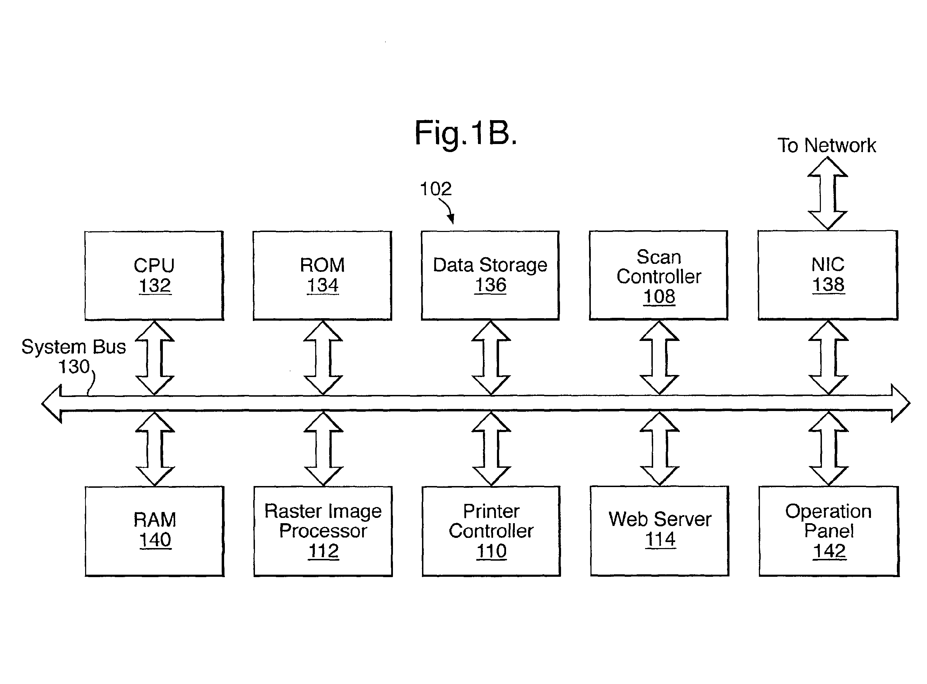

FIG. 1B is a block diagram depicting example internal details of printing device 102 in accordance with certain embodiments of the invention. As depicted in FIG. 1B, printing device 102 includes a CPU 132, a ROM 134, data storage 136, a scanner controller 108, a Network Interface Card (NIC) 138, a RAM 140, a RIP 112, a printer controller 110, a Web server 114, an operational panel 142 and a system bus 130.

The CPU 132 is a microprocessor that is configured to act as the system controller. ROM 134 stores a set of instructions that is used to run printing device 102. Data storage unit 136 is a storage device, such as a hard disk, floppy disk and/or optical disk drive that is configured to store information for executing printing device 102. Scanner controller 108 controls the scanner engine for scanning images and creating image data that is used in presenting preview document data to the client.

The NIC 138 provides a communication mechanism for communicating across a network with one or more client devices. The RAM 140 dynamically stores information, including image data and specific parameters or characteristics of printing device 102 that are used in presenting document preview images on the different clients. The RIP 112 is configured to convert input data such as PDL and bitmap images into rasterized image data which can be printed by printer controller 110 and/or used by Web server to present preview data on a requesting client. Print controller 110 controls the print engine and related peripheral components, such as the duplex unit and finisher to produce document printouts.

Web server 114 provides a communication mechanism for communicating with clients via NIC 138. In one embodiment, Web server 114 includes a Hypertext Transfer Protocol (HTTP) daemon that can respond to requests from clients 104 and 120 and to establish an HTTP connection between the printing device 102 and the requesting client. HTTP is merely an example of a communications protocol that can be used in an embodiment. Any other protocol that facilitates exchange of arbitrary information among a client and server can be used.

Operational panel 142 provides an interface that allows a user to input commands and to display information about the printing device 102 including the operations that are currently executing. System bus 130 represent an internal bus that is used to communicate between the different components of printing device 102.

### PREVIEWING DOCUMENTS

A preview interface is provided that allows a user to select specific finishing options for a document and to view the document as it will actually look when it is printed. In one embodiment, preview document information is provided as an HTML or XML document to either client 104 or 120 from printing device 102. In certain embodiments, the document presentation options that are displayed in a preview window are based on the specific characteristics of the selected printing device. Thus, by selecting a different printing device the preview interface automatically updates to display a set of document presentation options that are based on the characteristics of the newly selected printing device.

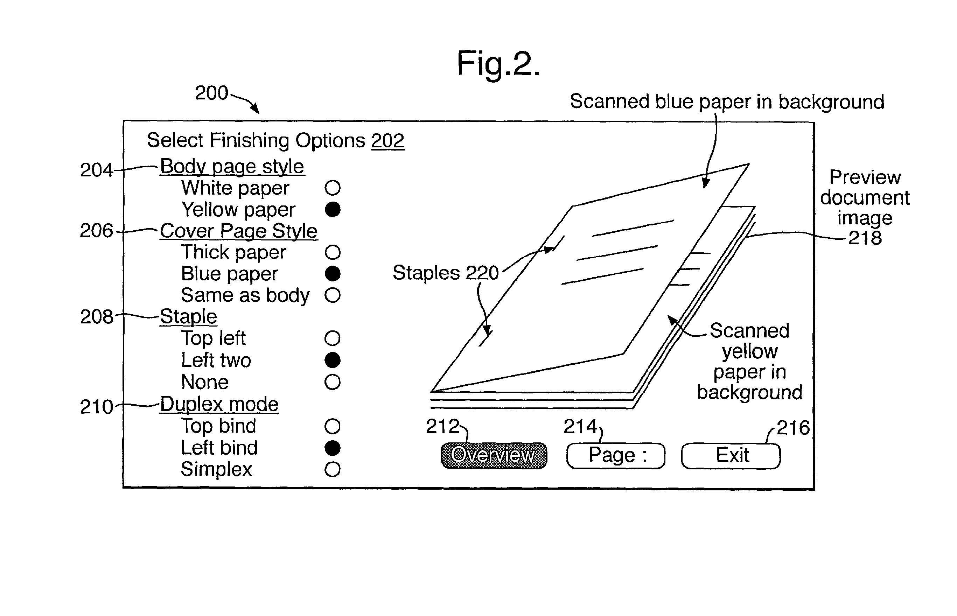

FIG. 2 illustrates an example preview window 200 that may be displayed by browser process 118 on client 104. As depicted, preview window 200 includes a set of finishing options 202 that may be selected for previewing an electronic document In one embodiment, document presentation options that are not typically available to the client, such as finishing options 202, are provided by printing device 102 for display within preview window 200. Thus, in previewing a document the user can view a more realistic image of how the document will actually appear if printed at the selected printer.

In this example, finishing options 202 includes a body page style option 204, a cover page style option 206, a staple option 208 and a duplex mode option 210. The body page style option 204 allows a user to select a particular type and/or color of paper that is to be used in printing the body of the document In this example, the user has selected the body of the document to be printed using a yellow paper. Alternatively, the cover page style option 206 provides a mechanism for selecting the particular type and/or color of paper that is to be used in printing the cover of the document. In this example, the user has selected the cover of the document to be printed using a blue paper.

The staple option 208 allows the user to select a particular method for stapling the document. In this example the user has chosen to staple the document by placing two staples along the left side of the document Conversely, the duplex mode option 210 provides the user with a set of binding options that are available when information is printed on both sides of the document's pages. In this example the user has chosen to bind the document on its left side.

Also depicted in preview window 200 is a preview document image 218 and a set preview document options 212, 214 and 216 are presented in preview window 200. Preview document image 218 consists of one or more preview images that depict a realistic view of how the electronic document will actually appear if printed with the selected options. In one embodiment, preview document 218 dynamically updates based the particular finishing and preview document options that are selected by the user. The preview document image 218 may be depicted as either a 2-dimensional or 3-dimensional image. In this example, in response to selecting overview button 212, a 3-dimensional image of the electronic document is displayed at the client. In one embodiment, the preview document image 218 is displayed using the colors that have been selected for the different pages. For example, based on the selected finishing options the cover of the preview document image 218 is displayed in blue while the body of the preview document image 218 is displayed in yellow. Also, based on the selected finishing options staples 220 are depicted along the left hand side of preview document image 218. In certain embodiments, the weight or thickness of the selected paper may also depicted to further present a realistic view of how the document will look if it is printed with a selected set of printing characteristics.

In addition to previewing a 3-dimensional image of the electronic document, the user may also preview the document on a page-by-page basis. For example, by selecting the page button 214 the preview document image 218 is updated to portray a 2-dimensional image of the selected page. In certain embodiments, each time the page button 214 is selected the preview document image 218 is updated to display an image of the next page of the electronic document. In addition, a user may enter a specific page number to jump directly to an image for that page.

### PROCESSING PREVIEW REQUESTS

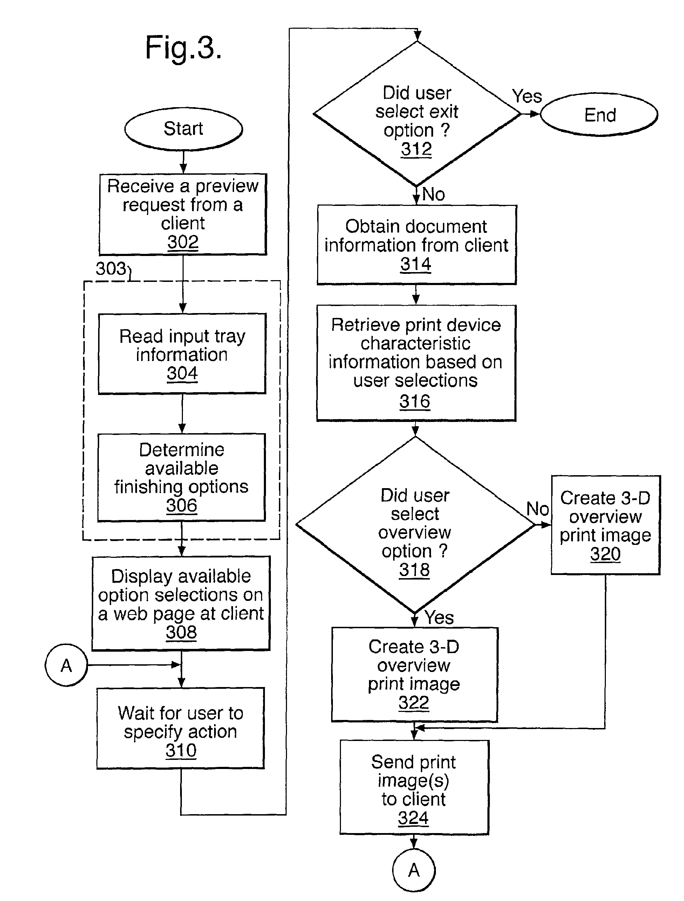

FIG. 3 is a flow diagram that illustrates an example of a preview sequence 300 that can be used for processing different preview requests that may be received from a client. The steps of FIG. 3 will be explained with reference to the components illustrated in FIGs. 1A and 1B, and the objects previously described in preview window 200 of FIG 2.

At block 302, a preview request is received from a client For explanation purposes it shall be assumed that a preview request is received at printing device 102 from client 104. For example, by interacting with client 104 a user may cause a preview request to be sent from browser process 118 to server process 114 of printing device 102. In one embodiment, in response to selecting a preview option associated with document application 116, browser process 118 is automatically executed to cause a preview request to be sent to the currently selected printing device 102.

At block 303, the specific characteristics of the selected printing device are obtained. These specific characteristics may include, among other things, input tray information that indicates the color and type of paper that is contained in each tray (block 304) and the finishing options that are available to the client user (block 306). In one embodiment, printing device 102 is configured to allow an operator to scan the paper that is loaded into each tray of printing device 102 and to enter data to associate a name and color with the paper that is loaded in each tray. For example, using the scanning process 108 an operator may scan the different types of paper that is loaded in each tray of printing device 102. The operator may also enter information through operational panel 142 to register characteristic information that is specific to printing device 102 (for example, character information 400 in FIG. 4).

At block 308, option selection information is transmitted from the printing device to the client to cause an interface window to be displayed at the client. In one embodiment, the interface window includes a set of selectable options for specifying how a document is to be printed. For example, as depicted in FIG. 2, a preview window 200 containing select finishing options 202 and preview document options 212, 214 and 216 may be displayed by browser 118 on client 104.

At block 310, the printing device waits for a response from the requesting client. If the response indicates that the user selected the Exit button 216 then the preview sequence 300 is ended. Alternatively, if the response indicates that the user selected either Overview button 212 or Page button 214 then the process proceeds to block 314.

At block 314, document information associated with a particular electronic document is obtained from the client. As previously explained, the document information may be deliver to printing device 102 in various formats. For example, the document information may consist of Printer Description Language (PDL) data, Printer Control Language ("PCL") data, raster image data or any other type of data that is generally sent to a printing device. In addition, in certain embodiments, the document information may be delivered in text form or other type of word processing format such as Microsoft Word® or WordPerfect®.

At block 316, the print device characteristic information that corresponds to the user's selections are retrieved from memory by the printing device. For example, based on the selected finishing options in FIG. 2, printing device 102 retrieves the Yellow.jpg and the Blue.jpg files respectively associated with trays "3" and "4".

At block 318, the printing device determines whether the user has requested to preview either an overview of the document or instead specific pages of the document. If the user has requested to preview an overview of the document then at block 322 the printing device generates data that depicts a 3-dimensional preview overview of the document. Alternatively, if the user had requested to preview specific pages of the document, then at block 320, the printing device generates 2-dimensional preview document data for the specific pages. In certain embodiments, to generate the preview document data, the printing device generates raster images based on the received document information and the specific characteristics of the printing device.

At block 324, the printing device transmits the preview document data to the client 104 for displayed within preview window 200. For example, as depicted in FIG. 2, in response to a user selecting Overview button 212, printing device 102 generates preview document data and transmits the data to client 104 to be displayed as a 3-dimensional preview document image 218 in preview window 200. Control then proceeds to block 310 to wait for further user input to be received which may include a request that the document be printed if the user is satisfied with how the document has been presented.

### HARDWARE OVERVIEW

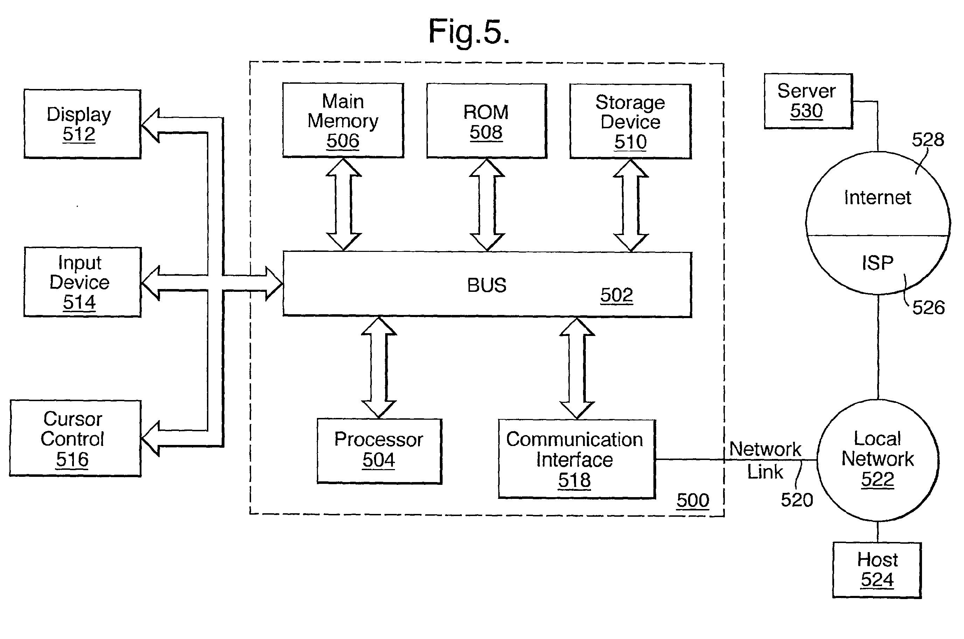

Figure 5 is a block diagram that illustrates a further example of a printing device computer system 500 upon which an embodiment of the invention may be implemented. Computer system 500 includes a bus 502 or other communication mechanism for communicating information, and a processor 504 coupled with bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

The invention is related to the use of computer system 500 for generating preview document data. According to one embodiment of the invention, a document preview mechanism is provided by computer system 500 in response to processor 504 executing one or more sequences of one or more instructions contained in main memory 506. Such instructions may be read into main memory 506 from another computer-readable medium, such as storage device 510. Execution of the sequences of instructions contained in main memory 506 causes processor 504 to perform the process steps described herein. One or more processors in a multi-processing arrangement may also be employed to execute the sequences of instructions contained in main memory 506. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 504 for execution. Such a medium may take many forms, including but not limited to, non-volatile media, volatile media, and transmission media. Non-volatile media includes, for example, optical or magnetic disks, such as storage device 510. Volatile media includes dynamic memory, such as main memory 506. Transmission media includes coaxial cables, copper wire and fiber optics, including the wires that comprise bus 502. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infrared transmitter to convert the data to an infrared signal. An infrared detector coupled to bus 502 can receive the data carried in the infrared signal and place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the worldwide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are exemplary forms of carrier waves transporting the information.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. In accordance with the invention, one such downloaded application provides for generating preview document data as described herein.

The received code may be executed by processor 504 as it is received, and/or stored in storage device 510, or other non-volatile storage for later execution. In this manner, computer system 500 may obtain application code in the form of a carrier wave.

### ALTERNATIVES, EXTENSIONS

The document preview mechanism that is described herein allows a user to preview a more realistic image of how an electronic document will look if printed by the selected printing device. In particular, by generating preview document data at the selected printing device, characteristics that are specific to the printing device and that are typically unavailable to a client computer can be incorporated into the preview images. Thus, a user is provided with a more detailed and current view of how a document will actually appear if printed on the selected printing device.

In describing certain embodiments of the invention, several drawing figures have been used for explanation purposes. However, the invention is not limited to any particular context as shown in drawing figures, and the scope of the invention includes other contexts and applications in which the preview document model described herein is available to other mechanisms, methods, programs, and processes. For example, the document preview system has been illustrated with a single printing device. However, embodiments of the invention are not limited to any particular number of printing devices which may each be configured to provide document preview images to requesting clients.

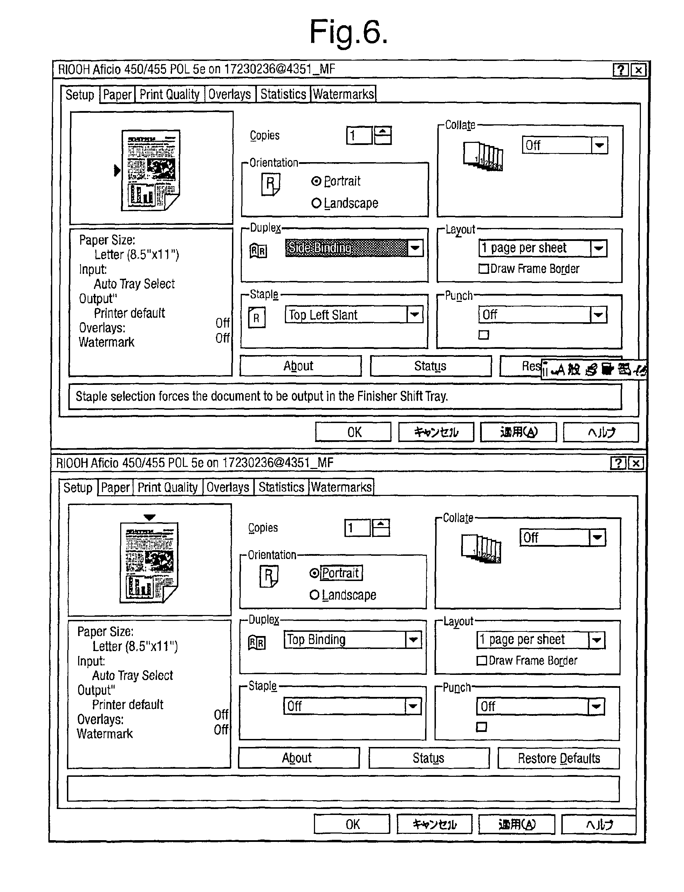

In addition, certain types of printer characteristics have been provided as examples in describing the invention. However, embodiments of the invention are not limited to any particular type of printer characteristic. For example, in addition to the finishing options described above, a user may also be presented with a set of character fonts or styles that are supported by the selected printing device. The user may then choose to preview the document based on the different fonts and/or styles, some of which may not be available through the print driver and/or conventional preview program. For example, FIG. 6 illustrates another example preview window 600 that may be displayed on client 104 for providing preview options to a user. Thus, the specification and drawings are, accordingly, to be regarded in an illustrative rather than a restrictive sense.

In addition, in this disclosure, including in the claims, certain process steps are set forth in a particular order, and alphabetic and alphanumeric labels are used to identify certain steps. Unless specifically stated in the disclosure, embodiments of the invention are not limited to any particular order of carrying out such steps. In particular, the labels are used merely for convenient identification of steps, and are not intended to imply, specify or require a particular order of carrying out such steps.

## Claims

1. A method for previewing an electronic document, the method comprising:
generating the electronic document at a client;
transmitting document information associated with the electronic document from the client to a printing device;
generating preview document data at the printing device based on the document information and a set of one or more specific characteristics associated with the printing device, wherein the set of one or more specific characteristics are unavailable at the client;
transmitting the preview document data to the client from the printing device; and
previewing the electronic document at the client based on the preview document data received from the printing device.

2. The method as recited in Claim 1, wherein:
the printing device is a multi-functional printer (MFP); and
the step of transmitting document information includes transmitting document information to the MFP.

3. The method as recited in Claim 1 or 2, wherein:
the document information is Page Description Language (PDL) data; and
the step of transmitting document information includes transmitting PDL data from the client to the printing device.

4. The method as recited in claim 1, 2 or 3, wherein the step of generating preview document data at the printing device includes generating raster image data at the printing device based upon the document information and the set of one or more specific characteristics associated with the printing device.

5. The method as recited in claim 1, 2 or 3, wherein the step of generating preview document data at the printing device includes generating a bitmap image at the printing device based upon the document information and the set of one or more specific characteristics associated with the printing device.

6. The method as recited in any one of the preceding claims, wherein
the printing device is associated with one or more different paper characteristics that are available for printing electronic documents; and
the set of one or more specific characteristics associated with the printing device includes one or more of the one or more different paper characteristics that are available for printing electronic documents.

7. The method as recited in Claim 6, wherein the one or more different paper characteristics includes one or more paper type characteristics, wherein the one or more paper type characteristics indicate a specific type of paper that has been for printing the electronic document

8. The method as recited in Claim 6 or 7, wherein the one or more different paper characteristics includes one or more paper color characteristics, wherein the one or more paper color characteristics indicate a specific color of paper that has been for printing the electronic document.

9. The method as recited in any one of the preceding claims, wherein
the printing device supports one or more different fonts that are available for printing electronic documents; and
the set of one or more specific characteristics associated with the printing device includes one or more of the one or more different fonts that are available for printing electronic documents.

10. The method as recited in any one of the preceding claims, wherein
the printing device is associated with one or more different stapling characteristics that are available for selection; and
the set of one or more specific characteristics associated with the printing device includes one or more of the one or more different stapling characteristics that are available for selection.

11. The method as recited in any one of the preceding claims, wherein
the printing device is associated with one or more different finishing characteristics that are available for selection; and
the set of one or more specific characteristics associated with the printing device includes one or more of the one or more different finishing characteristics that are available for selection.

12. The method as recited in any one of the preceding claims, wherein
the client includes a print driver that is associated with the printing device; and
the set of one or more specific characteristics that are unavailable at the client includes one or more characteristics that are unknown to the print driver.

13. The method as recited in any one of the preceding claims, wherein
the client includes a print driver that is associated with the printing device, wherein the print driver is associated with one or more print driver attributes that are not supported by the printing device; and
the step of generating preview document data at the printing device includes the step of translating one or more of the one or more print driver attributes into one or more printing device attributes that are supported by the printing device.

14. The method as recited in any one of the preceding claims, wherein the step of generating preview document data at the printing device further includes the steps of:
determining the resolution of a display device that is associated with the client; and
generating the preview document data based on the resolution of the display device.

15. The method as recited in any one of the preceding claims, wherein
the step of generating preview document data at the printing device includes the steps of generating two-dimensional (2-D) preview document data; and
the step of displaying the preview version of the electronic document includes the step of displaying portions of the electronic document at the client in 2-D.

16. The method as recited in any one of claims 1 to 14, wherein
the step of generating preview document data at the printing device includes the steps of generating three-dimensional (3-D) preview document data; and
the step of displaying the preview version of the electronic document includes the step of displaying portions of the electronic document at the client in 3-D.

17. The method as recited in any one of the preceding claims, wherein
the step of generating preview document data at the printing device includes the steps of generating HyperText Markup Language (HTML) data at the printing device; and
the step of transmitting the preview document data to the client includes the step of transmitting the HTML data to the client from the printing device.

18. The method as recited in any one of claims 1 to 16, wherein
the step of generating preview document data at the printing device includes the steps of generating Extensible Markup Language (XML) data at the printing device; and
the step of transmitting the preview document data to the client includes the step of transmitting the XML data to the client from the printing device.

19. A method for previewing an electronic document, the method comprising:
receiving from a client at a printing device document information associated with an electronic document;
generating preview document data at the printing device based on the document information and a set of one or more specific characteristics associated with the printing device; and
transmitting to the client the preview document data for causing a display unit associated with the client to display a preview version of the electronic document.

20. The method as recited in Claim 19, wherein:
the document information is Page Description Language (PDL) data; and
the step of receiving document information includes receiving PDL data at the printing device.

21. The method as recited in claim 19 or 20, wherein the step of generating preview document data at the printing device includes generating raster image data at
the printing device based upon the document information and the set of one
or more specific characteristics associated with the printing device.

22. The method as recited in Claim 19, 20 or 21, wherein
the printing device is associated with one or more different paper characteristics that are available for printing electronic documents; and
the set of one or more specific characteristics associated with the printing device includes one or more of the one or more different paper characteristics that are available for printing electronic documents.

23. The method as recited in Claim 19, 20, 21 or 22, wherein
the printing device is associated with one or more different finishing characteristics that are available for selection; and
the set of one or more specific characteristics associated with the printing device includes one or more of the one or more different finishing characteristics that are available for selection.

24. The method as recited in any one of claims 19 to 23, wherein the step of generating preview document data at the printing device further includes the steps of:
determining a display resolution of the display device that is associated with the client; and
generating the preview document data based on the display resolution of the display device.

25. The method as recited in any one of claims 19 to 24, wherein
the step of generating preview document data at the printing device includes generating three-dimensional (3-D) preview document data; and
the step of transmitting to the client the preview document data includes transmitting preview document data that causes the preview version of the electronic document to be displayed in 3-D on the display unit associated with the client

26. A computer program comprising one or more sequences of instructions for previewing an electronic document, wherein execution of the one or more sequences of instructions by one or more processors causes the one or more processors to perform the steps of any one of the preceding claims.

27. A system for previewing an electronic document, comprising:
one or more processors;
one or more memories coupled to the one or more processors; and
one or more sequences of instructions stored in the one or more memories, wherein execution of the one or more sequences of instructions by one or more processors causes the one or more processors to perform the steps of:
receiving from a client at a printing device document information associated with said electronic document;
generating preview document data at the printing device based on the document information and a set of one or more specific characteristics associated with the printing device, wherein the set of one or more specific characteristics are unavailable at the client;
transmitting the preview document data to the client from the printing device for displaying a preview version of the electronic document at said client.

28. An document preview apparatus comprising:
a memory for storing characteristics that are associated with the document preview apparatus, wherein the characteristics are unavailable to clients that are connected to the document preview apparatus; and
one or more processors that are configured for
receiving from the client document information associated with an electronic document;
generating preview document data based on the document information and one or more of the characteristics associated with the document preview apparatus; and
transmitting to the client the preview document data for causing a display unit associated with the client to display a preview version of the electronic document.
